# EUROPEAN PATENT SPECIFICATION

(11) **EP 1 316 400 B1**
(45) Date of publication and mention of the grant of the patent: **28.02.2007**
(21) Application number: 02025175.7
(22) Date of filing: 11.11.2002
(51) Int. Cl.: B29C 33/04, B29C 33/56, B29C 33/30

(54) **Shell mould assembly**
Schalenformwerkzeuganordnung
Construction de moule à coquille

(30) Priority: 12.11.2001 ES 200102487
(43) Date of publication of application: 04.06.2003
(73) Proprietor: Gamesa Eolica, S.A.U., 31013 Pamplona (ES)
(72) Inventor: Aramburu Arriaga, Joseba, 01510 Minano (Alava) (ES); Velez Oria, Sergio, Gamesa Eolica, S.A., 31013 Pamplona (Navarra) (ES)

(56) References cited:
- WO-A-95/20104
- FR-A- 2 541 931
- US-A- 4 398 693
- US-A- 5 529 479
- US-A- 5 902 535

## Description

The scope of this invention is the manufacturing of a new shell mould of a braced constitution by randomly distributed ribs, which is used for the manufacturing of windmill blades.

The loads supported by the structure and the deformations produced during curing process are absorbed by the ribs, which are distributed along mould and displayed according to the weight each of them sustain. These ribs sit on a composite bed, remaining screwed and bonded to it. This distribution of the ribs allows the introduction of an air circulation channel inside mould, whose shape is adjusted to blade profile. The air circulation is uniform and unexpected dilatations are avoided because they are absorbed by the braced structure that produces an accordion effect. With reference to the predictable deformations, these are absorbed in the lower mould with the degrees of freedom achieved by the kneecaps of structure legs and in the upper mould by the skates joined to the struts of the Flip-Over Device.

A second topic covered in this invention is the use of plies joined together forming a thicker and more consistent layer. The formation of these plies is achieved by a fabric whose filaments are entwined sinusoidly and is based on a weft of fibers made up of short strings.

### Background of the invention.

The moulds used in manufacturing windmill blades are confronted by the difficulty of their constitution, generally metallic, which reacts in an unsatisfactory way to the dilations suffered during resin polymerization, process known as material cure. Other moulds, which avoid when possible the use of metallic parts, are less affected by dilations but maintain a rigid structure that like a beam transmits the load and produces deformations.

The mould traditionally used for the constitution of similar blades has a rectangular shaped channel that does not reach the furthest mould zones. This fact makes curing process longer in order to achieve the complete polymerization of the product. On the contrary cure time is reduced if the inclusion of an adequately shaped channel to move hot air towards blade edges is achieved.

Prior investigation of the State of the Art establishes the starting point in the different manufacturing methods of blades and among the obtained patents the following ones should be highlighted: ES 2.007.179 patent uses a mould made of two male tools: one at leading edge and the other one at trailing edge, as blade to be made is manufactured in two parts that will eventually be assembled. In this case the mould as well as the blade are totally different. In the nearest prior art document ES 2.089.965 patent moulds are covered by an elastic material that expands due to heat release during curing process. However mould should be introduced in an autoclave in order to obtain resin polymerization, which will quite probably increase the price of the process. The ES 8.503.080 patent of Messerschmitt, currently outdated, proposes some bench type moulds where blade is formed by stratification procedures. Moulds are thicker at spar lateral edges, but they do not incorporate any means for curing inside. Finally, the EP 856.900 patent incorporates a shell mould on which a fabric layer made up of propylene and glass fiber threads is placed. It is put into a compartment with hot gas pressure feeding so that propylene melts and impregnates glass fiber threads, resulting in a rather different procedure than the one being requested by the patent here in presented.

When moulds do not incorporate internal heaters, curing process is performed in autoclaves where mould and blade are introduced together. The main disadvantages of this process are caused by the size of the blades, the price of the autoclaves and the dilations that may result during process. The use of a composite mould prevents the dilations that take place when synthetic resins that impregnate blade fibers get polymerized, compared to moulds made of other materials, which are affected by dilations that can be considered substantial due to their values.

The shell mould to manufacture windmill blades and the pattern so constituted, subject of this invention, has been developed in order to solve efficiently the deficiencies that the constitutive elements of these moulds present removing the differences in material cure through incorporating several hot air channels distributed along the mould, avoiding the necessity of an autoclave, and including a system to absorb mould thermal deformations that can damage the cured part.

### Description of the invention.

The mould presented in this invention is made up of two semi-moulds or shells interconnected to each other by means of hinges that allow the opening and closure of the shells. Each of the semi-moulds allows the manufacturing of a part of the blade, where the plies have been previously laid up, before closing and starting curing process or mould heating.

The semi-moulds or shells are big and generally rectangular shaped, locating the part at joint with shaft close to air injection system and therefore displaying blade tip towards the free area of the mould. Both shells are displaced at each side of an axis traced between the drives acting as hinges for closing and opening mould. The mould is basically made of non-metallic materials: a composite material bed, a metallic structure that sustains the bed, a mechanical system that moves one of the two semi-moulds while opening and closing, and a heating system that allows mould to work as a heater. The support structure is manufactured in such a way that inside it the whole composite bed is bordered by a conduit properly designed to allow model heating distributing the heat even to the furthest areas.

The air conduits that border mould are not redundant but structural and are far more suited to the profile shape. The structure is braced by ribs onto the composite material bed, not like a load transmitting beam, but like an accordion so that elongations are distributed at both sides of the mentioned point without provoking displacements. The dilations expected during curing process are minimized by the kneecaps included in the legs of the metallic structure attached to the lower semi-mould and by the skates at the end of the suspenders included in the turn system corresponding to the upper semi-mould.

The parts are molded by laying up plies on a tooling or shell shaped as a blade. These plies, made of thicker layers, come rolled up and are placed by unrolling them onto the shell and overlapping them longitudinally as marked on plies.

From all the previously described the following advantages of the shell mould to manufacture windmill blades and the pattern so constituted can be highlighted: by establishing one rib for each hinge the force to which structure is subjected to due to mould length is distributed. A glued composite material sheet is placed between the ribs since the glue works in shear and helps the absorption of the elongations. It does not work as a beam that transmits load, but as an accordion, so that elongations are distributed at both sides of the rib without provoking displacements. The air conduits are far more suited to the profile shape allowing a quicker curing, which accelerates manufacturing process. Finally, the laminate is made using new plies formed by joining other thinner plies, which results in an expensive application, but it is utterly balanced by the benefits obtained in the final mould.

### Brief description of the drawings

Figure 1 is a profile view that shows the interior of the shell mould, remarking the flip-over device, the interior stiffening beam, the beds of both shells and the conduits where the air circulates for the blade curing.
Figure 2 is a detailed view of a mould part and its corresponding ribs that form the braced structure.
Figure 3 is another detailed view of a mould part with the air conduits, the ribs and the rotating suspenders.
Figure 4 shows a detail of the lower semi-mould that shows the brace of the base structure and the bifurcation of the air conduit.
Figure 5 shows a schematic disposition of the screwed and glued ribs onto the composite bed and how the possible elongations produced on the structure can affect.
Figure 6 shows the group of the fabric constitutive plies that make up the pattern, and a detail showing the disposition of the weft and the short fibers that are entwined to each other forming the fabric.

### Description of the preferred embodiments of the inventory.

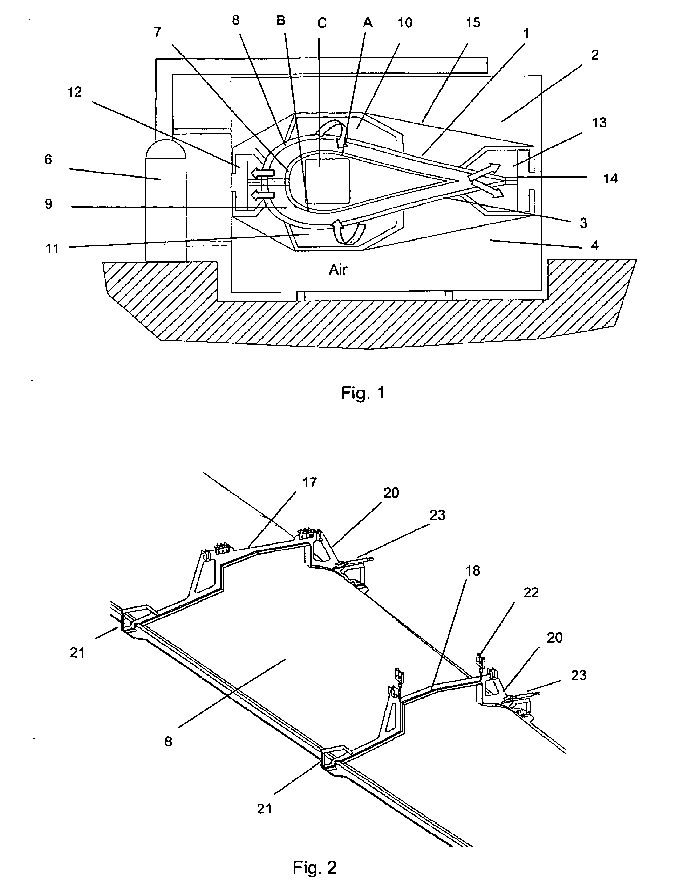

As shown on figure 1, shells or semi-moulds making up the mould are formed by two parts of composite material, preferably glass fiber and epoxy resin, which form the blade aerodynamic profile. On one hand there is the upper bed (1) immersed in the upper mould (2), and on the other hand there is the lower bed (3) placed in the lower semi-mould (4), which is based on the floor in a fixed position and supports the weight of the upper bed (1) as well as the blade kit formed by the stiffening beam (c) and the blade shells (a) and (b). The flip-over device (6) is the mechanical system that allows upper semi-mould (2) to reach the open and closed positions required for the manufacturing of the blades. In the manufacturing process blade is cold laminated and once the mould is closed the heat is applied. The shells (A) & (B) and the glue joining these shells with the beam (C), as well as the joint between shells through the flanges of the mould are cured inside noted mould.

The upper (1) and lower (3) beds are formed by a thermal chamber that is placed all over the mould. The manufacture of molding surface is carried out by a double skin sandwich, that is, one skin (7) and a second skin (7) of glass fiber and epoxy laminate with an intermediate honeycomb body with aluminum core (9).

A series of conduits in contact with the interior of the bed distribute the air uniformly introducing hot air and extracting it at a lower temperature. The impulsion of hot air is carried out by an upper central conduit (10) and a lower central conduit (11). The entrance into the bed is made by some holes drilled through the second skin (8) that are distributed according to the geometry of the blade. The air circulation is represented by the arrows included in the drawing. A sealing system is required to avoid air leaks or pressure loss during the curing cycle of the blade. The conduits are made of glass fiber and epoxy resin sandwich with insolating foam core. The central conduits (10) and (11) should bear the forces caused by the air pressure only. The air circulates from the central conduits (10) and (11) and after going through the intermediate core formed by the bed it moves through the front lateral conduits (12) and rear lateral conduits (13). The lateral conduits (12) and (13) should bear forces and that is why they are stiffened by some sustainers (14).

The manufacture of the upper semi-mould (2) and the lower semi-mould (3) is carried out on a pattern. The both semi-moulds should be provided by certain elements that bear vertical forces during the flip-over. For this purpose a series of ribs will be placed bordering the conduits in the lower semi-mould (3) as well as in the upper one (2), which coincide with each hinge of the flip-over device (6).

The bed area between conduits (10), (11), (12) & (13) is properly insulated in order to loose the minimum quantity of heat. The metallic structure will be closed by a series of sheet panels (15) that sit on the lateral conduits, the front and rear conduits (12) & (13), and the central conduits (10) & (11).

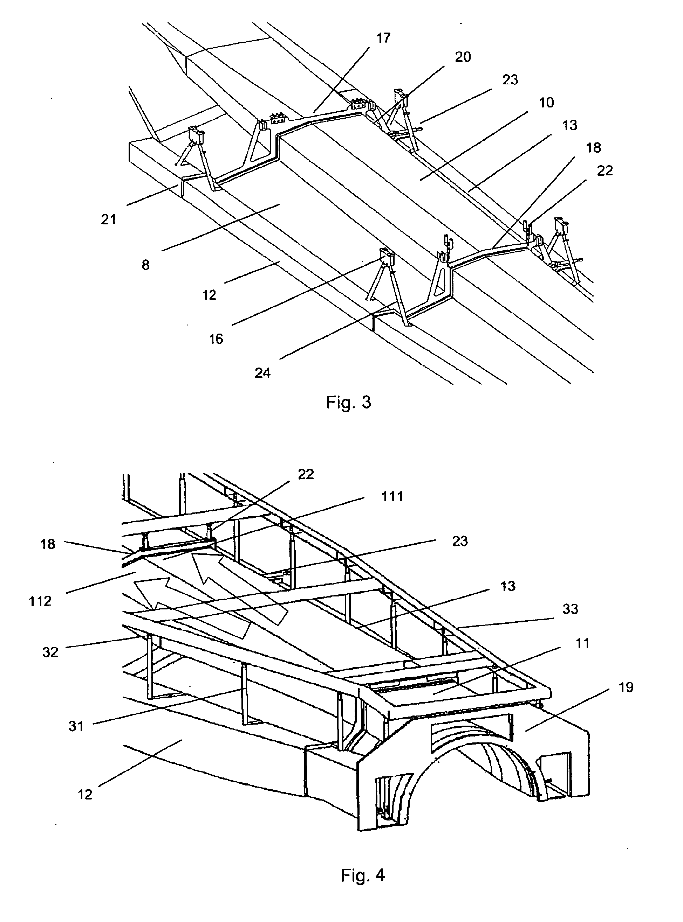

As shown in figures 2 and 3 the blade mould is transversally crossed by a series of ribs from which the first rib (not shown in the figure) and the second one (17) are different in their construction as well as in the complements they incorporate. The first rib is located close to the root and is made up of a rectangular frame whose two protruding edges are obliquely inclined and ended by occluded flanges that border front and rear conduits (12) & (13). The second rib (17) is made up of one rectangular shaped frame reinforced by lateral stringers (20), which like in the previously mentioned pattern are ended by occluded flanges (21) that border conduits (12) and (13). Starting from the second one (17) the rest of the ribs (18) is uniformly distributed, and their size decrease as the air conduit (10) & (11) over which they are located decreases too. These ribs are also formed by rectangular shaped frames with their corresponding reinforcing lateral stringers (20) and with (a) complementary element(s) like a pin (22) working mainly in traction, which are applied to the flip-over device structure of upper mould (2). Besides the pin supports (22) placed in the upper mould, some lateral supports (23) are displayed like sustainers from each side of the corresponding ribs (17) & (18). The last fastening elements are formed by supports (24) located at mould edges, which branch off over the occluded flanges (21) of the ribs and come to an end in several skates (16).

As shown in figure 4 the airflow that comes in through the lower central conduit (11) branches off and is distributed over the central area (111) as well as the lateral area (112), following the changing shape of the conduit. The airflow is represented in the drawing by two arrows that branch off and reach the maximum surface of the conduit. The loads borne by the mould vanish up to a considerable extent due to the accordion effect achieved by incorporating a series of ribs (17) & (18) randomly distributed according to the load to be borne. The metallic structure of the lower semi-mould (4) is made up of a series of legs (31) joined to the base structure (33), which once the mould is constituted will sit in the cavity formed in the floor. The joint is made by some kneecaps (32) that can minimize any displacement occurred during curing process.

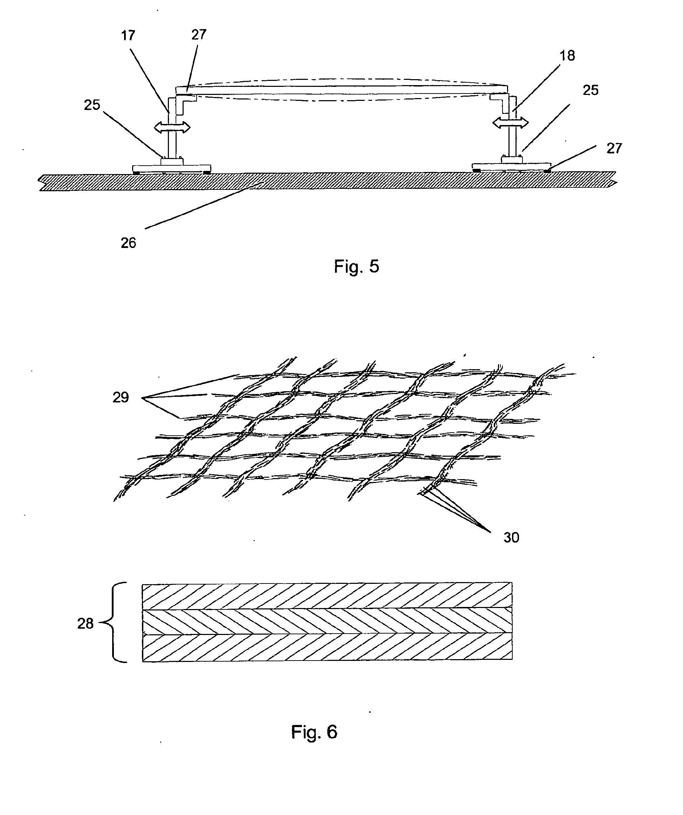

In figure 5 the mentioned ribs (17) & (18) sit on a composite bed (26) being screwed with the suitable fastening elements (25) and bonded with an adhesive (27) to the part corresponding to the air conduits (10) & (11). All the elongations are absorbed by the braced disposition of the mould.

In figure 6 the glass fiber plies (28) that make up the laminate used in manufacturing the skins (7) & (8) are thin plies formed by several layers whose fibers are located at 45° to one another. The ply (28) is made up of a conventional fabric based on a weft of fibers (29). The fibers are made up of entwined strings, so that one fiber (29) is made up of a group of strings (30) joined together and interweaved forming the mentioned fiber.

## Claims

1. Shell mould to manufacture wind power generator blades and pattern so constituted made up of two composite parts that form the blade profile, with an upper bed (1) immersed in the upper mould (2) and another lower bed (3) placed in the lower mould(4) **characterized by** this mould has a flip-over device (6) that allows mould to reach the open and closed positions; the introduction of hot air into the bed is carried out by several conduits geometrically adaptable to the blade shape, circulating from the root up to the tip through the central conduits (10, 11), going through a first skin (7), an intermediate core (9) and some holes drilled through the second skin (8), and returning through the front lateral conduits (12) and the rear lateral conduits (13), these conduits being stiffened by ribs braced over a composite bed, being screwed by the corresponding fasteners (25) and then bonding the kit formed by the ribs and the composite sheets (26) using an adhesive (27).

2. Shell mould according to first claim, in which glass fiber plies forming a laminate used to manufacture the beds of the pattern are made up of several layers, each ply (27) being based on a network of fibers (29) made up of a plurality of entwined strings, so that one fiber (29) is formed by a group of strings (30) joined together and interweaved, and with the fibers of each ply (28) displayed perpendicular to the adjacent ply.

3. Shell mould according to first claim, whose ribs are formed by a generally rectangular shaped frame with two protruding edges that are inclined obliquely and ended by occluded flanges (21) that borders the front conduit (12) and the rear conduit (13), some of those ribs including several reinforcing lateral stringers (20) and (a) complementary element(s) by way of pin (22) applied to the flip-over device.

4. Shell mould according to previous claim, which as well as the supports by way of pin (22) that exist in the upper semi-mould (2), includes some lateral supports (23) that are displayed by way of suspenders from each side of the corresponding ribs, several fasteners are formed by supports (24) located at the edges of the mould, which branch off over the occluded flanges (21) of the ribs and come to an end in several skates (16).

5. Shell mould according to third and fourth claims, whose lower semi-mould (4) and metallic structure is formed by a series of legs (31) distributed along both laterals and joined to the base structure (33), which is made up of several horizontal sheets that are joined to the mentioned legs (31) by kneecaps (32) that can absorb any possible displacement.

6. Shell mould according to first claim, where the conducts bordering mould are not redundant but structural, and which has a structure braced by ribs that absorbs the elongations distributed at both sides of the rib without provoking displacements or transmitting the load.

## Patentansprüche

1. Schalenform zur Herstellung von Rotorblättern für Windenergieanlagen und Muster, bestehend aus zwei Verbundteilen, welche die Rotorblattform erstellen mit einem oberen Bett (1), eingelassen in die obere Form (2), und einem unteren Bett (3), plaziert in der unteren Form (4); Diese Form besitzt eine Wendeeinheit (6), die es ermöglicht die Form in die geöffnete und geschlossene Position zu bewegen; Die Einleitung von heißer Luft in das Bett wird durch mehrere Luftkanäle ermöglicht, die in ihrer Form dem Flügelprofil angepasst sind. Die heiße Luft strömt von der Rotorblattwurzel hoch bis zur Rotorblattspitze durch die zentralen Kanäle (10) & (11), durch eine erste Schicht (7), einen Zwischenkern (9) und einigen Löchern, welche in die zweite Schicht (8) gebohrt sind, schließlich zurück durch den vorderen seitlichen Kanal (12) und den hinteren seitlichen Kanal (13). Diese Kanäle werden von Rippen versteift, welche ein Verbundbett umspannen und mittels entsprechender Befestigungsmethoden (25) verschraubt sind; schließlich wird dieser Satz aus Rippen und Verbundbett (26) mittels eines Klebemittels (27) verklebt.

2. Schalenform entsprechend Anspruch 1, in welcher die Glasfaserschichten, welche das Basismaterial für das Bett des Musters bilden, sehr dünn sind und aus mehreren Schichten bestehen. Jede Schicht (27) besteht aus einem Netzwerk aus Fasern (29), welche wiederum aus einer Mehrzahl von umwundenen Fäden bestehen, so dass eine Faser (29) aus mehreren Fäden (30) zusammengesetzt ist, welche wiederum miteinander verwoben die Schichten (28) ergeben. Diese Schichten (28) werden nun jeweils in ihrer Ausrichtung senkrecht zur angrenzenden Schicht verbunden.

3. Schalenform entsprechend Anspruch 1, deren Rippen rechteckförmig sind und dessen abstehende Kanten schräg stehen und in verdeckte Flansche (21) enden und an die seitlichen vorderen Kanal (12) und auf der anderen Seite an den seitlich hinteren Kanal (13) angrenzen. Einige Rippen vefügen über seitliche Versteifungen (20) und über einen oder mehrere stiftartige Befestigungen (22), die mit der Wendeeinheit verbunden werden.

4. Schalenform entsprechend dem vorhergehenden Anspruch, welche ebenso wie die stiftartigen Befestigungen (22), auch über seitliche Aufhängungen (23) verfügt, welche an jeder Seite der entsprechenden Rippe angebracht sind. Einige Befestigungen sind durch Stützen (24) gegeben, die sich an den Rändern der Form befinden und von den verdeckten Flanschen (21) der Rippen abzweigen und in einigen Schlitten (16) enden.

5. Schalenform entsprechen den Ansprüchen 3 und 4, dessen untere Halbschale (4) und metallische Struktur eine Serie von Beinen (31) beinhaltet, welche entlang beider Seiten plaziert sind und in einer Basisstruktur (33) zusammenlaufen. Besagte Basisstruktur besteht aus mehreren horizontalen Platten, die mittels Knieglenken (32) mit besagten Beinen (32) verbunden sind, welche somit ein verrutschen verhindert oder aufnimmt.

6. Schalenform entsprechend Anspruch 1, deren Luftkanäle, die an die Form angrenzen, strukturelle Eigenschaften haben und über eine Konstruktion aus Rippen verfügt, welche die Ausdehnungen auf beiden Seiten einer Rippe abdämpfen kann ohne ein Verrutschen zuzulassen oder die Belastungen zu übertragen.

## Revendications

1. Le moule à coque servant à fabriquer les pales du générateur d'électricité à vent et le modèle ainsi défini composé de deux parties composites qui forment le profil des pales, avec un lit supérieur (1) immergé dans le moule supérieur (2) et un autre lit inférieur (3) placé dans le moule inférieur (4) **caractérisé par** ce moule est doté d'un dispositif de pivotement (6) qui permet au moule d'obtenir les positions ouverte et fermée ; l'introduction d'air chaud dans le lit est générée par plusieurs conduits qui s'adaptent géométriquement à la forme de la pale, en circulant du fond jusqu'à la pointe à travers les conduits centraux (10, 11), en traversant une première peau (7), un noyau intermédiaire (9) et quelques trous percés dans la seconde peau (8) et revenant par les conduits latéraux avant (12) et arrière (13), ces conduits étant renforcés par des nervures contreventées sur un lit composite, qui sont vissées par les pièces de fixation correspondantes (25), puis le kit formé par les nervures et les feuilles composites (26) est fixé au moyen d'un adhésif (27).

2. Conformément à la première réclamation, moule à coque dans lequel les plis en fibre de verre qui forment un stratifié utilisé pour fabriquer les lits du modèle sont composées de plusieurs couches, chaque pli (27) dépendant d'un réseau de fibres (29) composé d'une vingtaine de fils tressés, de sorte qu'une fibre (29) soit formée d'un groupe de fils (30) assemblés ensemble et entrelacés, et avec les fibres de chaque pli (28) exposées perpendiculairement au pli adjacent.

3. Conformément à la première réclamation, moule à coque dont les nervures sont composées d'un cadre en général rectangulaire, avec deux bords receveurs inclinés à l'oblique et qui se terminent par des brides occluses (21) qui bordent les conduits avant (12) et arrière (13), certaines de ces nervures incluant des dispositifs de soutien latéraux de renforcement (20) et (a) un(des) élément(s) complémentaire(s) au moyen d'une pointe (22) fixée au dispositif de pivotement.

4. Conformément à la réclamation précédente, moule à coque qui, avec les supports à pointe (22) présents dans le demi-moule supérieur (2), inclut quelques supports latéraux (23) qui sont exposés au moyen de dispositifs de soutien à partir de chaque côté des nervures correspondantes ; plusieurs pièces de fixation sont formées par des supports (24) situés sur les bords du moule, qui bifurquent sur les brides occluses (21) des nervures et se terminent sur plusieurs patins (16).

5. Conformément aux troisième et quatrième réclamations, moule à coque dont le demi-moule inférieur (4) et la structure métallique sont formés par une série de jambes (31) distribuées le long des deux bords latéraux et assemblées à la structure de base (33), qui est composée de plusieurs feuilles horizontales assemblées aux jambes mentionnées (31) par des rotules (32) qui peuvent absorber tout éventuel déplacement.

6. Conformément à la première réclamation, moule à coque où les conduits qui bordent le moule ne sont pas redondants, mais structurels et qui a une structure contreventée par des nervures qui absorbent les élongations réparties des deux côtés, sans provoquer de déplacements, ni transmettre la charge.
